Europäisches Patentamt

European Patent Office

Office européen des brevets

(19)

(11) Veröffentlichungsnummer: **0 309 680**
A1

# EUROPÄISCHE PATENTANMELDUNG

(21) Anmeldenummer: 88112206.3

(22) Anmeldetag: 28.07.88

(51) Int. Cl.⁴: **E04F 21/16 , E01C 23/09 , B29B 13/02**

(30) Priorität: 22.03.88 DE 3809641
30.09.87 AT 2495/87

(43) Veröffentlichungstag der Anmeldung:
05.04.89 Patentblatt 89/14

(84) Benannte Vertragsstaaten:
AT BE CH FR GB IT LI LU NL SE

(71) Anmelder: **Semperit Aktiengesellschaft**
**Modecenterstrasse 22**
**A-1031 Wien(AT)**

(72) Erfinder: **Günzl, Friedrich, Dr.**
**Semperitstrasse 2**
**A-2630 Ternitz-Pottschach(AT)**
Erfinder: **Ledzinski, Janusz, Dipl.-Ing.**
**Johann Bauer-Strasse 20/7**
**A-2632 Wimpassing(AT)**

(74) Vertreter: **Müller, Hans-Jürgen, Dipl.-Ing. et al**
**Müller, Schupfner & Gauger**
**Lucile-Grahn-Strasse 38 Postfach 80 13 69**
**D-8000 München 80(DE)**

(54) Verfahren und Vorrichtung zum Verfugen von Natur-und Synthesebelägen.

(57) Bei einem Verfahren zum Verfugen von Natur-und Synthesebelägen wird mit flüssigem thermoplastischen und/oder kittartigem organischen Verfugungsmaterial gearbeitet. Eine Vorrichtung zum Verfugen weist eine Nadeldüse (2), einen Vorratsbehälter (3), einen Düsenstock (10), der insb. am hinteren Teil einer Trägerplatte (1) befestigt ist, auf. Die Nadeldüse (2) und der Düsenstock (10) sind insb. mit einer gefederten Aufhängung (4) aufgehängt bzw. abgestützt. An der Vorderseite der Trägerplatte (1) bzw. des Fahrwerkes befindet sich ein Führungsstift (6) mit einer Nivellierschraube (7). Das flüssige Verfugungsmaterial wird über die Nadeldüse (2) unter Druck in die mechanisch nicht vorbehandelte Fuge eingespritzt.

Fig. 1

EP 0 309 680 A1

## VERFAHREN UND VORRICHTUNG ZUM VERFUGEN VON NATUR- UND SYNTHESEBELÄGEN

Die Erfindung bezieht sich auf ein Verfahren und eine Vorrichtung zum Verfugen von Natur- und Synthesebelägen unter Verwendung eines organischen Materials.

Ein derartiges Verfahren und eine derartige Vorrichtung sind bereits bekannt (DE-OS 30 31 750). Dabei wird Verfugungsmaterial in einen auf dem Fahrwerk der Vorrichtung angeordneten Vorratsbehälter eingeführt und von dort unter Druck durch die Nadeldüse in die Fuge zwischen den zu verfugenden Belägen gespritzt. Die Austrittsöffnungen aus den Nadeldüsen münden oberhalb des Bodens der Fuge. Sowohl beim Einführen als auch beim Entlangführen der spitzen Düse beschädigen deren Wände die Ränder des Bodenbelags und/oder sogar den darunter befindlichen Boden, so daß ebenso wie bei mechanischen Vorbehandeln der Fuge abgeschabte Teilchen in der Fuge verbleiben, welche nicht nur das gute Abdichten der Fuge erschweren, sondern auch die Gefahr eines Verstopfens der Austrittsöffnung der Nadeldüse herbeiführen. Selbst die im Querschnitt elliptische Verformung der Nadeldüse läßt diese Nachteile nicht vermeiden. Darüber hinaus ist auch die gute Führung der Nadeldüse längs der Fuge nur mühsam zu bewerkstelligen. Bei dieser Vorrichtung sind weder der Vorratsbehälter noch die Düse beheizbar; sie eignet sich nicht für Verfugungsmaterial auf thermoplastischer Polymerbasis.

Darüber hinaus sind Handextrudervorrichtungen bekannt (DE-OS 23 22 829), mit deren Hilfe thermoplastische Materialien zuerst erhitzt und dann unter Druck durch ein Extrusionsmundstück gepreßt werden, um eventuelle Spalten zwischen einer Glas-Windschutzscheibe und einem passenden Rahmen eines Kraftfahrzeugs dichtend auszufüllen. Zum Verfugen von Bodenbelägen sind solche manuelle Extrudervorrichtungen ungeeignet.

Der Erfindung liegt die Aufgabe zugrunde, ein Verfahren und eine Vorrichtung der vorgenannten Gattung dahingehend zu verbessern, daß Fugen auf einfache Weise mit niedrigen Kosten dauerhaft verfugbar sind.

Das erfindungsgemäße Verfahren ist im Anspruch 1 und die erfindungsgemäßen Vorrichtungen sind in den Ansprüchen 4 und 6 gekennzeichnet. Weitere Ausbildungen der Erfindung sind in Unteransprüchen beansprucht und in der Beschreibung sowie der Zeichnung beschrieben.

Bei der Erfindung gelangen insbesondere thermoplastische Polymere oder Gemische derselben zur Anwendung; diese werden zuerst zwischen Temperaturen von etwa 50° und 300° verflüssigt und dann unter Druck durch die Austrittsöffnung aus der Nadeldüse in die Fuge gespritzt. Dabei wird die Nadeldüse in die Fuge eingeführt und längs dieser so entlangbewegt, daß das flüssige Material möglichst zuerst den Bodenbereich der Fuge ausfüllt und erst anschließenbd die darüber befindlichen Spaltbereiche ausfüllt. Eine mechanische Vorbehandlung durch beispielsweise Verbreitern mit Hilfe von Fugenfräsern oder Fungenhobeln ist dabei nicht erforderlich.

Darüber hinaus sind auch niedrigviskose Kitte und hochviskose Kitte verwendbar, wenn die Viskosität der letztgenannten durch Erhitzen erniedrigt wird. Die Viskosität der Kitte im Verarbeitungszustand, das heißt beim Einpressen in die Fuge sollte niedriger als $20 \times 10^3$ m Pas betragen. Sofern hochviskose Kitte verwendet werden, ist deren Viskosität auf entsprechende Werte zu vermindern.

In Ausführungsbeispielen sind besonders bevorzugte Verfugungsmaterialien noch beschrieben.

Besondere Vorteile bietet die ebenfalls auf einem in Fugenrichtung fahrbaren Fahrwerk angeordnete Vorrichtung dadurch, daß die Nadeldüse an einem insbesondere als Düsenträger ausgebildeten Düsenträger am hinteren Teil einer Trägerplatte des Fahrwerks angeordnet ist, während an der Vorderseite des Fahrwerks (in Fahrrichtung gesehen) ein Führungsstift nach unten ragt. Dieser ist mittels einer Nivellierschraube so auf Höhe unter das Fahrniveau der Räder des Fahrwerkes absenkbar, daß er ebenso wie die Nadeldüse in die Fuge eingreift und mit dieser in Bezug zur Fuge fluchtet. Ein oder mehrere Räder des Fahrwerkes können mittels eines Motors, beispielsweise eines Elektromotors, antreibbar sein.

Für kurze Fugen oder schwierig zugängliche Bereiche derselben kann auch eine übliche Handpistole verwendet werden.

In jedem Fall empfiehlt es sich, das Verfugungsmaterial mittels einer Heizeinrichtung so weit zu erhitzen, daß es die beste Viskosität zum Einspritzen in die Fuge durch die Nadeldüse hindurch aufweist und sich dort optimal mit den die Fuge begrenzenden abdichtenden Materialien abdichtend verbindet. Dabei empfiehlt es sich, auch den Druck der durch die Nadeldüse zu messenden Materialien so zu steuern, daß möglichst auch eine mechanische Verankerung des Verfugungsmaterials im Bereich der Ränder und des Bodens der Fuge erfolgt. Hierzu empfiehlt sich ein Druck von insbesondere mehr als 3 bar, z.B. zwischen 3 und 8 bar.

Die besondere Ausbildung der Düse an der Spitze in Form eines abgerundeten verhältnismäßig schmalen Stirnendes verhindert im übrigen das unerwünschte Abschürfen von Randteilen der Beläge oder Teilen des Fugengrundes.

Durch die konische Ausbildung der Nadeldüse im Bereich der in die Fuge einführbaren Spitzen werden nicht nur die Festigkeit der Nadel im übrigen Teil - außerhalb der Fuge - erhöht, sondern auch durch eine entsprechende Abmessung der Kanäle innerhalb der Nadeldüse, durch welche das flüssige organische Verfugungsmaterial fließt, die Strömmungsverhältnisse verbessert.

Die Erfindung hat gegenüber bekannten Verfahren folgende u.a. Vorteile:

Das Fräsen, Hobeln und dergleichen mechanische Vorbehandeln der Fuge ist nicht erforderlich und man kann Fugen mit sich ändernder Breite und Tiefe gut ausfüllen (die kegelartige Nadeldüse mit seitlicher Austrittsöffnung nach hinten ermöglicht das problemlose Einführen in sogenannte "Null-Fugen", ohne den Belag zu beschädigen oder die Nadeldüse zu verstopfen).

der Verbrauch an Verfungungsmitteln ist bis zu 6-mal geringer als beim herkömmlichen Verfahren mit gefräster oder beschnittener Fuge;

die Fuge ist nach dem Verfugen kaum sichtbar und

das Einfallen der Fuge nach dem Abstoßen des Überstandes ist ausgeschlossen, da auch sehr schmale Fugen ausfugbar sind;

das Hinterfüllen des Belages erfolgt vom Untergrund d.h. Fugengrund her, was die federbelasteten und "konstante Eintauchtiefe" ermöglichenden Nadeldüse und Führungsstift begünstigen;

oberflächliche Ablöseerscheinungen, die bei bekannten Verfugungsmethoden zu Undichtheiten führen, sind durch die Hinterfüllung der Fuge vom Untergrund her, vermeidbar;

die Verfugungen sind bei Auswahl geeigneter Verfugungsmaterialien rollstuhlgeeignet in Anlehnung an die ÖNORM B 5200 und B 520;

die Fugenmassen sind einfärbbar.

Anhand der Zeichnung sind bevorzugte Ausführungsbeispiele der Erfindung im folgenden näher beschrieben. Dabei zeigen:
Fig. 1 eine schematische Seitenansicht durch eine erfindungsgemäße Vorrichtung;
Fig. 2 einen schematischen Querschnitt durch eine Ausbildung der Nadeldüse;
Fig. 3 einen schematischen Querschnitt durch eine andere Ausbildung der Nadeldüse;
Fig. 4 einen schematischen Teilschnitt durch den Bereich der Vorrichtung, in der sich die Nadeldüse befindet, und

Fig. 5 einen Teilquerschnitt durch einen Bereich der Vorrichtung in der Nähe des Führungsstiftes.

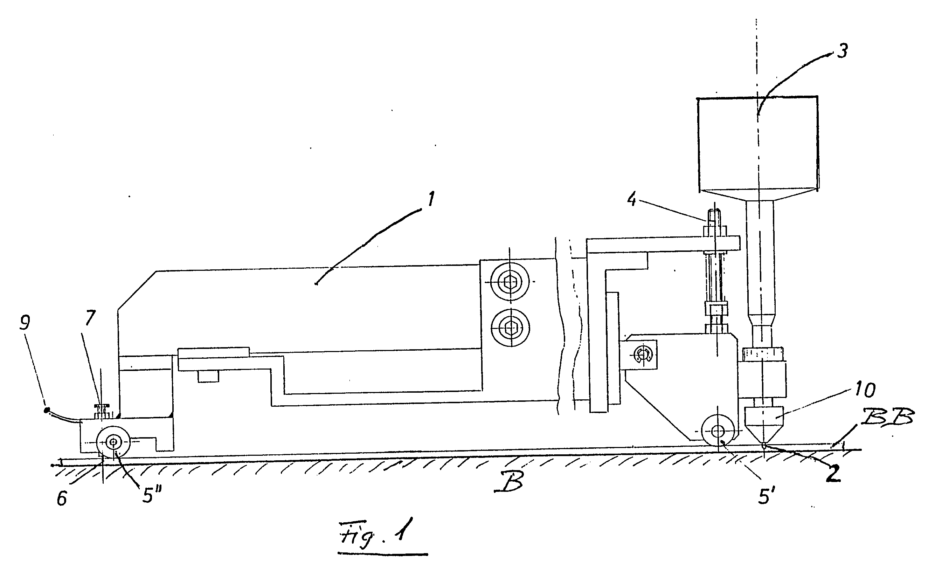

Gemäß Fig. 1 soll eine Fuge mit Verfugungsmaterials ausgefüllt werden, welches sich oberhalb des Bodens B zwischen den Seitenrändern zweier parallel verlaufender Bahnen von Bodenbelägen BB befindet.

Die Vorrichtung weist ein Fahrwerk bzw. eine Trägerplatte 1 auf, an deren hinterem Teil eine Nadeldüse 2 mit einem beheizbaren Vorratsbehälter 3 angebracht ist.

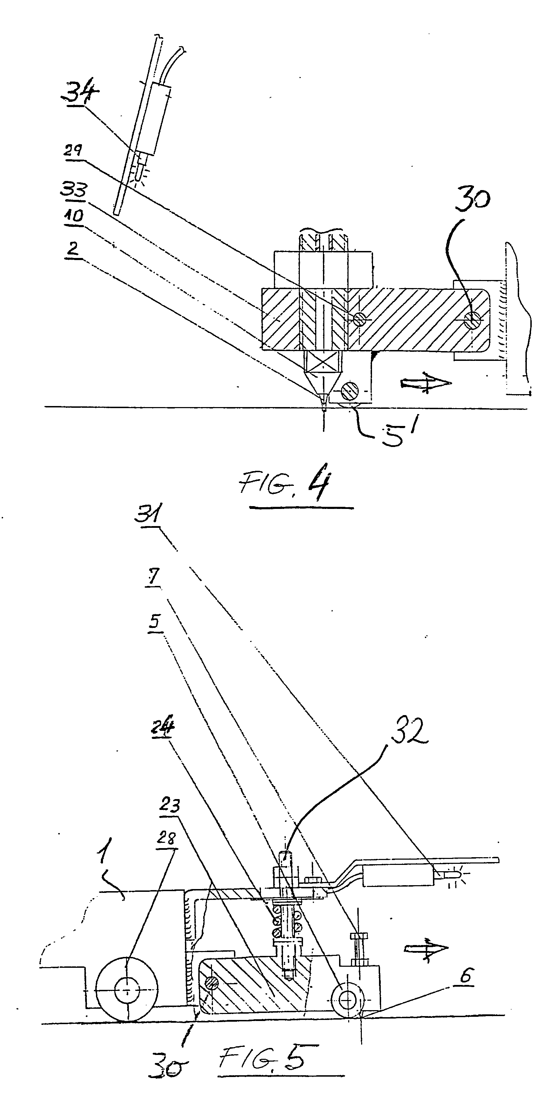

An den beheizbaren Vorratsbehälter 3 ist eine Druckvorrichtung, z.B. Kompressor, als Druckgeber angeschlossen. Die Nadeldüse 2 ist mit einer gefederten Aufhängung 4 verbunden. Oberhalb der Nadeldüse 2 befindet sich ein beheizbarer Düsenstock 10. Im vorderen Teil der Trägerplatte 1 ist ein Führungsstift 6 mit einer Nivellierschraube 7 angebracht. Das Fahrwerk bzw. die Trägerplatte 1 sind auf vorderen Rädern $5''$ und hinteren Rädern $5'$ gelagert. Im vorderen, unteren Teil der Trägerplatte 1 ist ein Endschalter 9 angebracht. Die Vorrichtung ist noch mit Antriebsrädern 28 gemäß Fig. 5 und mit einer Trennmittelauftragseinrichtung ausgestattet. Im vorderen Bereich, etwa hinter dem vorderen Rad $5''$, ist die Trennmittelauftragsvorrichtung angebracht.

Der Vorratsbehälter 3 der Vorrichtung wird mit einem organischen Material gefüllt. Die Temperatur des beheizbaren Vorratsbehälters 3 wird mit einem Temperaturregler über dem Schmelzpunkt des jeweiligen organischen Materials gehalten. Dieses Material wird über die Nadeldüse 2 unter Druck in die Fuge hineingedrückt. Um die Eindringtiefe der Nadeldüse 2 in die Fuge des Belages BB regulieren zu können, ist diese mit der Regulierstange 4 verbunden. Die Eindringtiefe der Nadeldüse 2 in die Fuge beträgt insb. mindestens 50% der Fugentiefe. Der Düsenstock 10 kann mit dem Heizstab 29 (Fig. 4) nach Bedarf beheizt werden. Der Düsenstock 10 ist mit der Nadeldüse 2 in einem Träger 33 gelagert, der um die horizontale Achse 30, die quer zur Fugenlängsrichtung verläuft, auf- und abschwenkbar ist.

Gemäß Fig. 5 führt der Führungsstift 6 die ganze Vorrichtung entlang der Fuge. Die Eindringtiefe des Führungsstiftes 6 wird mit der Nivellierschraube 7 reguliert. Der Führungsstift 6 ist auch in einem Träger 23 gelagert, der um einen horizontalen und quer zur Fugenlängsrichtung verlaufenden Lagerstift 30 schwenkbar ist und sich auf den Rädern $5''$ abstützt. Der Träger 23 ist durch die Feder 24 gegen die Trägerplatte 1 abgestützt und an einem auf- und abbewegbaren Aufhängestift 32 auf die Trägerplatte 1 aufgehängt. Durch diese bewegliche Verbindung ist die konstante Eintauchtiefe auch im Falle einer unebenen Bodenfläche gewährleistet. Der Führungsstift 6 kann nicht aus der Fuge herausrutschen.

Der Endschalter 9 stellt die Fortbewegung der Vorrichtung beim Berühren eines Hindernisses, z.B. einer Wand, ein. Die Beleuchtung 31 beleuchtet den Fugenbereich vor dem Führungsstift 6.

Die Träger 23 und 33 sind federnd auf der Tragplatte 1 aufgehängt und auf den Rädern 5' und 5" abgestützt und gewährleisten, daß die Eindringtiefe der Nadeldüse 2 und des Führungsstiftes 6 in die Fuge gleichmäßig ist.

Mit den Verfugungsgeräten sind bei entsprechender Auswahl des Verfugungsmateriales, der Temperatur und Druckführung sowie der Düsendimensionierung, Verfugungsgeschwindigkeiten bis zu 8 m/min. möglich. Es werden vor allem folgende Verfugungsgeräte eingesetzt: Handgeräte (manuell bedienbar), fahrbare Geräte und Selbstfahrgeräte.

Bei ungleichmäßigen Fugenbreiten ist der Einsatz einer Vorrichtung, die von Hand geschoben wird, im prinzipiellen Aufbau aber gleich des selbstfahrenden Gerätes ist, vorteilhafter. In schwierig zugänglichen Bereichen oder für kurze Fugenlängen kann auch eine vereinfachte Vorrichtung in Form einer Handpistole, die nur die Nadeldüse 2 und den Düsenstock 10 enthält, verwendet werden; umgekehrt kann auch die Handpistole auf eine Trägerplatte 1 montiert werden. Auch bei einer Handpistole ist die Eintauchtiefe der Nadeldüse 2 einstellbar.

Die Fördermenge der Vorrichtung ist abhängig von der:

- Viskosität des Verfugungsmaterials;
- Temperatur;
- Druckführung;
- freien Querschnittsfläche der Düsennadel.

Dieses Verfahren erlaubt nicht nur die Verfugung von Belagstößen, sondern auch die Verfu-gung von Belag-Wandabschlußprofilen, Trittkanten-profilen und ähnlichem mehr. Man kann es sogar für die Verfugung von Wandbelägen verwenden.

Beispielsweise folgende Belag-Kombinationen können verfugt werden; auch ein Austausch eines der Kombinationspartner durch einen anderen ist je nach Vefugungsmaterial möglich:

Gummibelag - Gummibelag
Gummibelag - Wandabschlußprofil aus thermoplastischem Kautschuk
PVC-Belag
Linoleum-Belag
Kork-Belag
Holz-Fliesen

Die Verfugung mit einer Handpistole kann z.B.

folgendermaßen durchgeführt werden:

Vorbehandeln der Fuge mit einem Trennmittel auf Basis von z.B. Silikon, Seife, Wachs, Fett usw.;
Einsetzen der Nadeldüse 2 in die Fuge;
Druckaufbringen und mit der Nadeldüse 2 so schnell die Fuge entlangfahren, daß immer ein kleiner Überstand aus der Fuge gepreßt wird;
Entfernen des Überstandes von Verfugungsmaterial nach dem Erkalten (bei Thermoplasten) bzw. nach dem Ende der Vernetzungsreaktion oder des Aushärtens (bei vernetzbaren Thermoplasten bzw. vernetzenden Kitten und ähnlichem).

Beispiel 1:

Als Fugenkitt wird ein niedrigviskoses (Viskosität 15.000 m Pas), vernetzendes Silikon in Kartuschen verwendet. Auf die Kartusche wird der Düsenstock 10 mit einer Nadeldüse 2 aufgeschraubt, die Kartusche mit dem Düsenstock 10 wird in eine handelsübliche Druckluftpistole eingesetzt und der Fugenkitt wird ohne weitere Temperaturzufuhr in die mit Trennmittel im Bereich von je etwa 1 cm links und rechts, also beidseitig vorbehandelte Fuge eingespritzt. Nach dem Ausreagieren des Materials wird das überstehende Material in bekannter Weise entfernt.

Beispiel 2:

Als Verfugungsmaterial wird feuchtigkeitsvernetzendes Polyurethan mit einem Schmelzpunkt von 60° C verwendet. Auf die Kartusche wird die Nadeldüse 2 mit dem Düsenstock 10 aufgeschraubt und die Kartusche in den beheizbaren Vorratsbehälter eingesetzt und auf 100° C aufgeheizt. Nach dem Erreichen der Temperatur wird, wie im Beispiel 1 beschrieben, das thermoplastische Material in die Fuge eingespritzt. Nach dem Erkalten wird der Überstand in bekannter Weise entfernt.

Beispiel 3:

Als Verfugungsmaterial wird ein thermoplastisches Polymer auf Polyamidbasis mit einem Schmelzpunkt von 130° C verwendet. Dieser wird in Granulatform in den beheizbaren Vorratsbehälter 3 der Vorrichtung gebracht. Der Vorratsbehälter 3 wird auf 180° C und der angeschlossene Düsenstock 10 wird auf 200° V erhitzt. Nach dem Verflüssigen des Materials wird die Nadeldüse 2 in die Fuge gebracht und das Verfugungsmaterial unter Druck von 5 bar in die Fuge gepreßt. Nach dem Erkalten wird der Überstand in bekannter Weise entfernt.

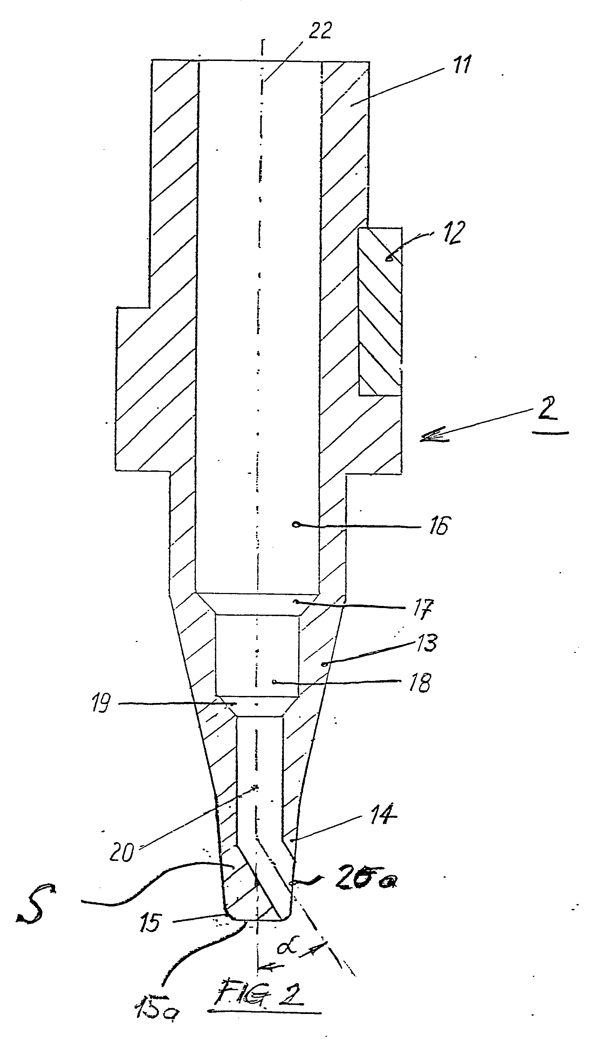

Die bevorzugte Nadeldüse 2 gemäß Fig. 2 ist im oberen Teil 11 (etwa 2/3 lang) zylinderförmig. Die Wandstärke des oberen Teiles bis zur Halteklammer 12 ist größer als die Wandstärke unterhalb derselben. Die Halteklammer 12 oder ein Fixierstift verhindern das Drehen der Nadeldüse 2 während des Verfugens, so daß sich die schräg nach hinten gerichtete Austrittsöffnung 20a stets an der nachlaufenden Seite der Nadeldüse 2 befindet.

An den oberen Teil 11 schließt ein oberer stumpfer Kegelteil 13 an. Dieser hat einen Neigungswinkel der Kegelwand zur Nadeldüsenachse 22 von 15 bis 35°. An den oberen Kegelteil 13 schließt nahtlos der untere Kegelteil 14 an. Die Kegelwand des unteren Kegels 14 hat eine Neigung zur Nadeldüsenachse von 2 bis 15°. Die Ränder 15 des unteren Kegelteils 14, auch "Spitze S" genannt, an dessen Stirnenden 15a sind abgerundet.

Der innere Teil der Nadeldüse 2 besitzt im Bereich des oberen Teils 14 eine Zylinderkammer 16. An diese schließt eine stumpfe Kegelkammer 17 und daran eine weitere, im Querschnitt kleinere Zylinderkammer 18 an. Diese mündet über die weitere konische oder stumpf-kegelige Kammer 19 in den Auslaufkanal 20.

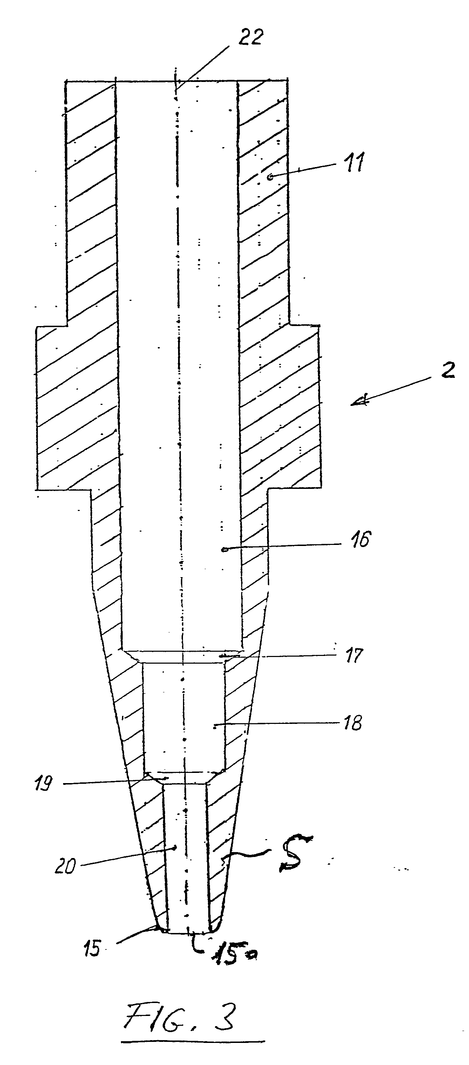

Der Auslaufkanal 20 läuft entweder (gemäß Fig. 3) senkrecht, d.h. als direkte Fortsetzung der Düsenachse 22, oder (gemäß Fig. 2) 2 bis 3 mm vom Stirnende 15a unter einem Neigungswinkel α von 5 bis 45° und zwar entgegengesetzt zur Bewegungsrichtung des Verfugungsgerätes über die Austrittsöffnung 20a ins Freie, d.h. in die Fuge. Bevorzugt wird ein Neigungswinkel α von etwa 30°.

Die Nadeldüse 2 gemäß Fig. 3 mit dem senkrechten Auslaufkanal 20 eignet sich besser für Handpistolen, damit die Verfugungsrichtung problemlos geändert werden kann.

Die Nadeldüse gemäß Fig. 2 mit dem Auslaufkanal 20 unter einem Neigungswinkel von 5 bis 45° wird bevorzugt bei der Vorrichtung eingesetzt. Mit der runden Nadeldüse 2 ist es möglich, auch um die Ecke, im Kreis, usw, zu fahren, ohne den Reibungswiderstand zu erhöhen.

Die Nadeldüse 2 wird mit dem Düsenstock 10 z.B. mit Hilfe einer Überwurfmutter auf der Vorrichtung fiziert. Der Durchmesser des Auslaufkanals 20 an der Austrittsöffnung beträgt bevorzugt zwischen 1 und 1,5 mm bei einem Durchmesser der Zylinderkammer 16 zwischen 2 und 5 mm.

Bei der Vorrichtung sind im Bereich des Führungsstiftes 6 und der Nadeldüse 2 auf der Trägerplatte 1 Beleuchtungen 31, 34 mit Blenden aufmontiert. Der Lichtstrahl von diesen ist so ausgerichtet, daß die Nadeldüse 2 und der Führungsstift 6 beim Einsetzen in die Fuge und beim Verfugen gut sichtbar sind. Bei Handpistolen kann im Bereich der Nadeldüse 2 mit einer Klemme auch eine solche Beleuchtung mit Blende angebracht sein.

Alle Zusatzeinrichtungen z.B. zur Temperatursteuerung, Druckerzeugung und deren elektrische Anschlüsse befinden sich insb. auf einem separaten Wagen. Dieser Wagen ist mittels einer flexiblen Hülle mit der Vorrichtung zur Verfugung verbunden. Diese beherbergt insb. folgende Leitungen

Druckmediumleitung (z.B. Preßluft oder Stickstoff), elektrische Kabel für die Heizung, elektrische Kabel für den Antrieb, elektrische Kabel für die Beleuchtung und elektrische Kabel für die Temperaturregelung.

Die flexible Hülle ist so lang, daß man jeden Raum verfugen kann, ohne den Wagen mit den Zusatzeinrichtunge bewegen zu müssen.

Wenn man den Arbeitsplatz wechselt, wird der Wagen für die Zusatzeinrichtunge, für den Transport aller Geräte, verwendet. Darum wurde das Gewicht der Vorrichtungen zur Verfugung deutlich reduziert, so daß sie sehr handlich sind.

Die Erfindung bietet viele Vorteile gegenüber dem Stand der Technik:

Durch geeignete Temperaturwahl kann man die Viskosität so einstellen, daß die an sich festen Thermoplaste durch die Nadeldüse 2 preßbar sind. Auch die Verarbeitung von Granulat, Pulver, Stix, Streifen ist möglich.

Die Vorratskammer 3 und die Nadeldüse 2 kann man getrennt tem perieren.

Über die Temperatur und den Druck kann man die Ausflußmenge des Verfugungsmaterials und dadurch die Verfugungsgeschwindigkeit variieren (bei demselben Nadelquerschnitt). Der einstellbare Temperaturbereich ermöglicht auch die Verfugung von temperaturempfindlichem Material.

Durch die hohe Temperatur des Verfugungsmaterials ist es nicht notwendig, die Fuge mechanisch vorzubearbeiten (Schneiden, Fräsen usw.). Durch die höhere Temperatur ist auch die Adhäsion der Verfugungsmaterialien am Fugenrand-und -boden besser; daher entfällt das nochmalige Vorschneiden, Fräsen der Fugen.

Durch die flexiblen Anschlüsse ist es möglich, auch sehr kleine Geräte zu konstruieren und an schwer zugänglichen Stellen und kurze Fugenstükke zu verfugen. Man kann also sehr handliche Geräte nach diesem System bauen und einsetzen.

Wenn notwendig, kann man auf einem fahrbaren Wagen, auf dem z.B. Gasflaschen, Elektroanschlüsse usw., gelagert sind, mehrere Verfugungsvorrichtungen anschließen, wobei sich in jedem Gerät ein anderes Verfugungsmaterial befinden kann.

Die Beaufschlagung mit Druck ist unabhängig vom Kompressor (Gewichtsvorteil). Jede Art von Gas, Luft, Stickstoff, Inertgas usw. kann man verwende. Bei Polyamid wird insb. Stickstoff als Druckmittel verwendet. Das Druckmittel wird aus Stahlflaschen Entnommen und über flexible Leitung zur Verfugungsvorrichtung geführt (Gewichtsersparnis).

Durch die Temperierung des Ganzen Systems kommt man mit relativ geringerem Druck aus. Wahlweise kann man an der Gasflasche (Schlauch) eine Pumpe zwischenschalten, um größeren Druck zu erreichen.

Fugenausfüllung von dichtgeschlossenen Fugen bis zu mehreren Millimeter breiten Fugen sind möglich.

Die Eintauchtiefe der Nadeldüse und des Führungsstiftes ist regulierbar. Leichte Hindernisse in der Fuge beeinflussen die Funktion der Vorrichtung nicht.

**Ansprüche**

1. Verfahren zum Verfugen von Natur- und Synthesebelägen mit einem organischen Material, bei dem das organische Material unter Druck im flüssigen Zustand durch eine Nadeldüse in die Fuge eingespritzt wird,
**dadurch gekennzeichnet,**
daß als organisches Material thermoplastische Polymere mit einem Schmelzpunkt zwischen 50 und 300° C oder Gemische mit diesen im durch Erhitzen verflüssigten Zustand und/oder niedrigviskose Kitte und/oder hochviskose Kitte im durch Erhitzen niedrigviskos gemachten Zustand unter Druck durch die Nadeldüse in die mechanisch nicht vorbehandelte Fuge eingespritzt werden.

2. Verfahren nach Anspruch 1,
**dadurch gekennzeichnet,**
daß niedrigviskose Kitte mit einer Viskosität bis zu 20.000 m Pas verwendet werden.

3. Verfahren nach Anspruch 1,
**dadurch gekennzeichnet,**
daß hochviskose Kitte mit einer Viskosität von über 20.000 m Pas verwendet werden.

4. Verfahren nach Anspruch 1,
**dadurch gekennzeichnet,**
daß durch Feuchtigkeit vernetzbares Polyurethan als organisches Material verwendet wird.

5. Verfahren nach Anspruch 1,
**dadurch gekennzeichnet,**
daß ein thermoplastisches Polymer auf Polyamidbasis oder Ethylen-Vinylacetat-Copolymer als organisches Material verwendet, zuerst in Granulatform gebracht, in einem Vorratsbehälter gespeichert, dann auf etwa 120° C bis 180° C verflüssigt, kurz vor der Nadeldüse auf etwa 200° C weitererhitzt und schließlich unter einem Druck oberhalb 1 bar in die Fuge eingespritzt wird.

6. Verfahren nach Anspruch 2,
**dadurch gekennzeichnet,**
daß vernetzbares Silikon als organisches Material verwendet wird.

7. Vorrichtung zum Verfugen von Natur- und Synthesebelägen aus organischem Material mit einem Vorratsbehälter für das organische Material, mit einem Druckgeber, mit einer in die Fuge mindestens teilweise einführbaren Nadeldüse und mit einer Verbindungsleitung zum Zuführen flüssigen organischen Materials unter Druck zur Nadeldüse,
**dadurch gekennzeichnet,**
daß die Nadeldüse (2) eine mindestens an den Rändern (15) abgerundete Spitze (S) aufweist, die im Querschnitt in Richtung zum freien äußeren Stirnende (15a) mindestens teilweise konisch ausgebildet ist.

8. Vorrichtung zum Verfugen von Natur- und Synthesebelägen aus organischem Material mit einem Vorratsbehälter für das organische Material, mit einem Druckgeber, mit einer in die Fuge mindestens teilweise einführbaren Nadeldüse und mit einer Verbindungsleitung zum Zuführen flüssigen organischen Materials unter Druck zur Nadeldüse, insbesondere nach Patentanspruch 7, bei der die Nadeldüse an einem Fahrwerk bzw. einer Trägerplatte befestigt ist, das sich auf Rädern abstützt,
**dadurch gekennzeichnet,**
daß die Nadeldüse (2) mit einem Düsenhalter bzw. Düsenstock (10) höhenverstellbar angeordnet ist und daß am Fahrwerk ein federbelasteter verstellbarer Führungsstift (6) angeordnet und ebenso wie die Nadeldüse (2) bis unter das von den Rädern (5', 5'') befahrbare Niveau absenkbar ist.

9. Vorrichtung nach Anspruch 8,
**dadurch gekennzeichnet,**
daß die Nadeldüse (2) mit dem Düsenhalter (10) in einem Träger (33) angeordnet sind, der um ein in Horizontalrichtung quer zur Fugenlängsrichtung verlaufendes Schwenklager (30) schwenkbar und an einer durch eine Feder federbelasteten Aufhängung (4) bzw. Abstützung aufhängbar bzw. abstützbar ist.

10. Vorrichting nach Anspruch 8 oder 9,
**dadurch gekennzeichnet,**
daß der Führungsstift (6) in einem Träger (23) eingesetzt ist, der um ein in Horizontalrichtung quer zur Fugenlängsrichtung verlaufendes Schwenklager (30) schwenkbar und an einer durch eine Feder (24) nach unten federbelasteten Aufhängung (32) am Fahrwerk bzw. der Trägerplatte (1) aufhängbar bzw. abstützbar ist.

11. Vorrichtung nach einem der Ansprüche 8 bis 10,
**dadurch gekennzeichnet,**

daß sich die Trägerplatte (1) auf in Fahrtrichtung vorderen Rädern (5″) und hinteren Rädern (5′) abstützt und sich der Führungsstift (6) im Bereich des vorderen Rades (5″) und die Nadeldüse (2) im Bereich des hinteren Rades (5′) befinden.

12. Vorrichtung nach einem der Ansprüche 8 bis 11,
**dadurch gekennzeichnet,**
daß ein Endschalter (9) in Bewegungsrichtung der Trägerplatte (1) über diese hinausragt.

13. Vorrichtung nach einem der Ansprüche 8 bis 23,
**dadurch gekennzeichnet,**
daß sich der Führungsstift (6) und die Nadeldüse (2) in einer Fluchtlinie parallel zur Bewegungsrichtung der Räder (5) befinden.

14. Vorrichtung nach einem der Ansprüche 7 bis 13,
**dadurch gekennzeichnet,**
daß die Nadeldüse (2) im oberen Teil (11) bis etwa 2/3 ihrer Länge im wesentlichen zylinderförmig ausgebildet ist und im darunter anschließenden Teil zwei im wesentlichen kegelförmige Teile, nämlich einen oberen Kegel (13) mit einem Neigungswinkel der Kegelwand zur Nadeldüsenachse zwischen 15 und bis 35° und einen unteren Kegel (14) mit einem Neigungswinkel der Kegelwand zur Nadeldüsenachse (22) zwischen 2 und 15°, aufweist.

15. Vorrichtung nach einem der Ansprüche 7 bis 14,
**dadurch gekennzeichnet,**
daß die Nadeldüse (2) innen im Bereich des oberen zylinderförmigen Teils eine Zylinderkammer (16) aufweist, die über eine stumpfe Kegelkammer (17) in eine zweite kleinere Zylinderkammer (18) übergeht, die über eine weitere stumpfe Kegelkammer (19) in den Auslaufkanal (20) mündet.

16. Vorrichtung nach Anspruch 15,
**dadurch gekennzeichnet,**
daß der Auslaufkanal (20) vor der Austrittsöffnung (20a) aus der Nadeldüse (2) unter einem Neigungswinkel ($\alpha$) zwischen 5 und 45° zur Düsenachse (22) entgegengesetzt zur Bewegungsrichtung beim Verfugen geneigt ist.

17. Vorrichtung nach einem der Ansprüche 7 bis 16,
**dadurch gekennzeichnet,**
daß im Bereich des Führungsstiftes (6) eine Beleuchtung (31) auf dem Fahrwerk angebracht ist.

18. Vorrichtung nach Ansprüche 7 bis 17,
**dadurch gekennzeichnet,**
daß im Bereich der Nadeldüse (2) eine Beleuchtung (34) auf dem Fahrwerk angebracht ist.

EP 0 309 680 A1

_Fig. 1_

FIG 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 721 329 (W. FLEISSNER) * Ansprüche; Figuren 1-3; Seite 4, Zeilen 1-3,21-25; Seite 5, Zeilen 1-4; Seite 7, Zeilen 11,12,18-20 * | 1,7 | E 04 F 21/16 E 01 C 23/09 B 29 B 13/02 |
| A,D | DE-A-3 031 750 (ARON KASEI CO.) * Ansprüche; Figuren 2,11,17-20; Seite 12, Zeilen 7-11 * | 1,7 | |

RECHERCHIERTE SACHGEBIETE (Int. Cl.4)

E 04 F
E 01 C
B 29 B

Der vorliegende Recherchenbericht wurde für alle Patentansprüche erstellt

| Recherchenort | Abschlußdatum der Recherche | Prüfer |
|---|---|---|
| DEN HAAG | 20-09-1988 | NILSSON |